# EUROPÄISCHE PATENTSCHRIFT

(11) **EP 1 408 295 B1**
(45) Veröffentlichungstag und Bekanntmachung des Hinweises auf die Patenterteilung: **16.12.2009**
(21) Anmeldenummer: 03022711.0
(22) Anmeldetag: 09.10.2003
(51) Int. Cl.: F25D 3/12, C01B 31/22

(54) **Verfahren und Vorrichtung zum Kühlen von Waren in einem wärmeisolierten Transportbehälter unter Einsatz eines Kühlmoduls**
Method and device for cooling goods in a thermally insulated transport container using a cooling module
Procédé et dispositif pour réfrigérer des marchandises dans un conteneur de transport calorifugé utilisant un module de réfrigération

(30) Priorität: 11.10.2002 DE 10247489
(43) Veröffentlichungstag der Anmeldung: 14.04.2004
(73) Patentinhaber: Air Liquide Deutschland GmbH, 40235 Düsseldorf (DE); Messer Group GmbH, 65843 Sulzbach (DE)
(72) Erfinder: Lürken, Franz, Dr., 47906 Kempen (DE)
(74) Vertreter: Kahlhöfer, Hermann

(56) Entgegenhaltungen:
- EP-A- 0 631 096
- DE-A1- 10 129 217
- FR-A- 2 565 336
- GB-A- 609 432
- US-A- 5 271 233
- US-A- 6 151 913

## Beschreibung

Die Erfindung betrifft ein Verfahren zum Kühlen von Waren in einem wärmeisolierten Transportbehälter (im Folgenden kurz: Behälter), der einen mit einem Kühlmodul für die Aufnahme von Trockeneis in thermischem Kontakt stehenden Beschickungsraum aufweist, wobei dem Kühlmodul in Abhängigkeit einer vorgegebenen Kühlleistung und Kühldauer Kühlmittel verschiedener Menge und Eigenschaften zugeführt wird.

Weiterhin betrifft die Erfindung eine Vorrichtung zur Einstellung einer vorgegeben Kühlleistung in einem Kühlmodul für die Aufnahme von Trockeneis, umfassend einen Kühlmittel-Vorrat, aus dem das Kühlmodul in Abhängigkeit von der vorgegebenen Kühlleistung über eine Kühlmittel-Zuführung mit Kühlmittel gespeist wird.

Zum Transport und zur Lagerung verderblicher Waren, insbesondere von Lebensmitteln, werden Behälter mit einer thermisch isolierenden Wandung (wärmeisolierte

Transportbehälter) eingesetzt. Die Behälter werden in der Regel zusätzlich gekühlt, um eine niedrige Innentemperatur über einen längeren Zeitraum aufrechterhalten zu können. Im Frischdienst-Bereich liegen die Temperaturen zwischen 0°C bis +12°C und bei gefrorenem Kühlgut, wie zum Beispiel Tiefkühlkost und Eiscreme, bei Temperaturen zwischen -18°C bis -25°C.

Die Gleichgewichtstemperatur, die sich innerhalb des isolierten Behälters aufgrund Kühlleistung und Wärmeeinfall einstellt, ist von der Umgebungstemperatur abhängig. Eine im Hinblick auf hohe Temperaturen im Sommer ausgelegte Kühlleistung kann bei kälteren Außentemperaturen zu Gefrierschäden des Kühlguts führen, und umgekehrt wird im Auslegungsfall auf eine niedrige Außentemperatur die Temperatur-Obergrenze im Behälter im Sommer leicht überschritten. Daher erfordert insbesondere die Kühlung von Waren mit besonders engem Toleranzbereich, der zum Beispiel bei Fleisch zwischen 0 und 4 ° C liegt, eine aufwendige Kühltechnik mit einer Abstimmung der Kühlleistung auf die Umgebungstemperatur. Auf eine Temperaturregelung wird aber aus Kostengründen üblicherweise verzichtet.

Häufig wird Trockeneis in Form von Blöcken zur Kühlung verwendet. Eine Anpassung der Kühlleistung unter Einsatz von solchen Kohlendioxidblöcken an den jeweiligen Bedarf ist jedoch problematisch. Die Oberfläche eines Eisblocks ist im Verhältnis zu seiner Masse relativ klein (< 1 cm²/g), woraus sich eine für praktische Zwecke zu kleine Kühlleistung ergibt. Ferner überziehen sich Trockeneisblöcke sehr schnell mit Wassereis, welches sich aus der Luftfeuchtigkeit bildet und was zu einer stark sinkenden Kühlleistung führt.

Aus diesem Grunde hat sich die Kühlung mit Trockeneisschnee etabliert. Die Kühlleistung ist wesentlich höher, weil der Schnee eine poröse Struktur hat und beispielsweise 10kg Schnee in praktisch eingesetzten Schalen eine äußere, d.h - um die Schüttung außen herumgespannte- Oberfläche von 120 dm² gegenüber zwei 5 kg Blöcken von zusammen nur ca. 20dm² Oberfläche haben. Zum bestimmungsgemäßen Einsatz wird der Trockeneisschnee in einen Behälter gefüllt, der üblicherweise Wannenform aufweist, und dessen Isolation die Kühlleistung bestimmt, Feuchte abhält und das System somit deutlich verbessert.

In ähnlicher Weise wird auch flüssiger Stickstoff zum Kühlen eingesetzt, wobei hierbei der notwendige Behälter so gut isoliert wird, dass eventuell anfrierende Feuchtigkeit keine nennenswerte Veränderung der Isolation bewirken kann.

Zur Kühlung der Behälter sind Kühlmodule bekannt, die mit tiefkaltem flüssigen oder schneeförmigen Kohlendioxid oder tiefkaltem flüssigen Stickstoff als Kühlmedien befüllt werden. Ein derartiges Kühlmodul ist in der DE-T 694 04 231 beschrieben, aus der auch ein Verfahren und eine Vorrichtung der eingangs genannten Gattung bekannt sind. In der DE-T 694 04 231 wird ein Verfahren zur Kühlung von Waren in einem isolierten Behälter unter Einsatz von Trockeneisschnee vorgeschlagen. Hierzu ist im oberen Bereich des Behälters ein Trockeneisfach vorgesehen. In das Trockeneisfach wird eine dosierte Menge von unter Druck stehendem flüssigen Kohlendioxid eingespritzt, wobei die Dosierung auf klimatische Bedingungen abgestimmt ist. Dadurch ist es möglich, die im Trockeneisfach entstehende Trockeneisschnee-Menge zu variieren und an die aktuellen Umgebungstemperaturen anzupassen.

Die zum Befüllen des Trockeneisfachs eingesetzte Vorrichtung besteht aus einem Tank für flüssiges Kohlendioxid, der über eine Druckleitung mit dem Trockeneisfach verbunden werden kann, und aus einer Steuereinheit mit Zeitgeber, mittels der die Einspritzdauer von unter Druck stehendem flüssigen Kohlendioxid in das Trockeneisfach vorgegeben wird.

Eine Anpassung der Kühlleistung unter Einsatz von Trockeneisschnee ist jedoch ebenfalls problematisch. Während am Anfang bei großen Kohlendioxidschneemengen eine hohe Kühlleistung erzielt werden kann, ist diese nach kurzer Zeit durch (Wasser-, Eis- und Schneeauflage aus der Umgebungsluft sowie vor Allem vorzeitiger Trockeneis-Sublimation stark eingeschränkt. Femer kann die Kühlleistung und die Kühldauer naturgemäß mit nur einem wählbaren Parameter nicht unabhängig eingestellt werden.

Bei der zur Durchführung des bekannten Verfahrens eingesetzten Vorrichtung sind wegen des CO₂-Überdruckbetriebs aufwendige Sicherheitsvorkehrungen sowie kostspielige Raumluftüberwachungsanlagen und Absaugungen nötig. So werden in der DE-T 694 04 231 Konversionsraten von ca. 25% genannte, die mit einer Gasfreisetzung von ca. 2 m³ je 1 kg Trockeneisschnee einhergehen. Durch die freigesetzte Gasmenge wird nicht nur der MAK - Wert sehr schnell erreicht, sondern sie stellt auch einen erheblichen wirtschaftlichen Verlust dar.

Weiterhin ist aus der DE 563 068 bekannt, Trockeneis oder feste Kohlensäure als Kühlmittel für Kühleinrichtungen einzusetzen. Zum Kühlen wird das Kühlmittel in ein in dem oberen Teil einer Kühleinrichtung angeordnetes, als Flasche ohne Boden ausgebildetes und mit seinem Flaschenhals nach dem Kühlraum gerichtetes Gefäß eingebracht. Eine kontinuierliche Beschickung und Mengenregelung des Kühlmittels ist nicht möglich.

In der EP 06 40 295 B1 ist ein Gerät zum Kühlen eines Nahrungsmittelprodukts mit einem Mittel zum Auftragen einer kryogenen Substanz (Kohlendioxidschnee) auf das in einer Speicherkammer eingebrachten Nahrungsmittelprodukt.

Die DE 195 41 338 A1 zeigt ein Verfahren und eine Vorrichtung zum Kühlen von Bodendeckschichten oder -belägen, bei dem ein Granulat aus gefrorenen Teilchen, insbesondere aus Trockeneis-Pellets, bevorzugt flächig auf das zu kühlende Gut aufgebracht wird. Durch Temperatur, die Teilchengröße und/oder die aufgebrachte Schichtdicke des Granulats kann die Flächenkühlleistung eingestellt werden. Diese speziell zum Kühlen von Bodendeckschichten oder -belägen konzipierte technische Lösung ist aber zum Kühlen von Waren in einem Behälter ungeeignet.

Aus der EP 0 631 096 A ist auch schon eine Vorrichtung mit einstellbarer Kühlleistung in einem Kühlmodul für die Aufnahme von Trockeneis bekannt, allerdings kann dort die Größe der Partikel des Trockeneises nicht eingestellt werden.

Auch aus der US 5 271 233 A ist eine Kühleinrichtung mit Trockeneis bekannt, die aber ebenfalls keine Variation der Größe der Trockeneispartikel vorsieht.

Aufgabe der Erfindung ist es, ein einfaches, alternatives Verfahren anzugeben, das es unter Einsatz von Trockeneis ermöglicht, die Kühlleistung und die Kühlzeit unabhängig voneinander innerhalb eines Behälters auf die Umgebungsbedingungen abzustimmen.

Weiterhin liegt der Erfindung die Aufgabe zugrunde, eine preisgünstige und zugleich wartungs- und bedienungsfreundliche Vorrichtung zum Kühlen von Waren in einem Behälter bereitzustellen, die sich durch eine hohe Betriebssicherheit und eine an die erforderliche Kühlleistung und Kühlzeit problemlos anpassbare Kälteerzeugung auszeichnet, und bei der auf Raumluftüberwachung und Absaugung verzichtet werden kann.

Diese Aufgabe wird durch ein Verfahren gemäß dem Anspruch 1 und durch eine Vorrichtung gemäß dem Anspruch 9 gelöst. Vorteilhafte Weiterbildungen sind in den jeweils abhängigen Ansprüchen angegeben.

Hinsichtlich des Verfahrens wird diese Aufgabe ausgehend von dem eingangs genannten Verfahren erfindungsgemäß dadurch gelöst, dass als Kühlmittel in ihrer spezifischen Oberfläche und Menge in Abhängigkeit von der Kühlleistung und der Kühldauer vorab eingestellte Tockeneis-Körnung dem Kühlmodul zugeführt und in dem Kühlmodul in einer von der Kühlleistung und Kühldauer abhängigen Korngröße verteilt und verdampft wird.

Die spezifische Oberfläche ist das Verhältnis von Oberfläche der Trockeneis-Körnung und deren Masse. Die Verdampfungsrate von Trockeneis-Körnung hängt u.a. von dessen spezifischer Oberfläche ab.

Die Verdampfungsrate wiederum ist nur ein anderes Maß für die Kühlleistung. Eine größere Oberfläche führt zu einer höheren Verdampfungsrate und damit zu höherer Kühlleistung und umgekehrt.

Die Größe der Oberfläche von Trockeneis-Körnung wird durch die Menge (Masse) an Trockeneis und durch die Größe und die Größenverteilung der Trockeneis-Körner bestimmt.

Aber auch bei gleicher Korngrößenverteilung wirkt sich eine Erhöhung der Masse nicht zwangsläufig proportional auf die Verdampfungsrate aus, sondern auch die Verteilung und Packungsdichte der Körnung spielt hier eine wichtige Rolle.

Es wird deshalb im Folgenden von der wirksamen Oberfläche, also dem Teil der inneren und äußeren Oberfläche der betrachteten Verteilung, die wesentlich zur Verdampfung beiträgt, gesprochen.

Sowohl die Kühlleistung, als auch die Kühldauer hängen somit von der Masse als auch von der wirksamen Oberfläche der Trockeneisschüttung ab, wobei die Einstellung dieser Parameter in der Praxis empirisch ermittelt werden kann.

Als Anhaltspunkt kann aber bei der Verwendung des erfindungsgemäßen Moduls angegeben werden, dass die Kühlleistung im wesentlichen durch die spezifische Oberfläche und die Kühldauer durch die Masse bestimmt wird.

Von diesem Sachverhalt wird bei der Erfindung Gebrauch gemacht, indem die spezifische Oberfläche und die Masse der zur Befüllung des Kühlmoduls vorgesehenen und in dem Kühlmodul eingebrachten Trockeneis-Körnung auf Werte eingestellt werden, die in Abhängigkeit von der zu erzielenden Kühlleistung und der erforderlichen Kühldauer ermittelt werden.

Verfahren zur Einstellung der spezifischen Oberfläche von Körnungen sind allgemein bekannt. Vorzugsweise wird die spezifische Oberfläche der Trockeneis-Körnung durch Zerkleinern von Trockeneis-Pellets eingestellt. Bei Trockeneis-Pellets handelt es sich um grobkörnige Partikel mit einem mittleren Durchmesser im Bereich von 2 bis 20 mm. Diese werden beispielsweise mittels handelsüblicher Trockeneis-Pelletierer erhalten

Durch Zerkleinern der Trockeneis-Pellets lässt sich die mittlere Korngröße der Trockeneis-Körnung und damit die spezifische Oberfläche der Körnung in weitem Rahmen einstellen. Hierzu wird eine Zerkleinerungseinrichtung mit einem einstellbaren, steuerbaren oder regelbaren, beweglichen Zerkleinerungswerkzeug, zum Beispiel einem rotierenden Messer, eingesetzt. Die mittlere Korngröße der Trockeneis-Körnung - und damit deren spezifische Oberfläche und Kälteleistung - wird beispielsweise über die Geschwindigkeit der Bewegung des Zerkleinerungswerkzeugs eingestellt. Das Zerkleinern der Trockeneis-Pellets erweist sich als einfaches, reproduzierbares Verfahren, das ohne großen apparativen und energetischen Aufwand durchführbar ist.

Durch die erfindungsgemäß in einem ersten Verfahrensschritt auf einen vorab anhand der Fracht- und Umgebungsbedingungen ermittelten Wert eingestellte spezifische Oberfläche der Trockeneis-Körnung kann die erforderliche Kühlleistung des Behälters somit vor dem Transport auf einfache Art und Weise auf die aktuellen Gegebenheiten abgestimmt werden.

Selbstverständlich ist es auch möglich, bereits in geeigneter Größe vorliegende Pellets ohne eine weitere Vorbehandlung in das Kühlmodul einzubringen.

In einem zweiten Verfahrensschritt wird die in das Kühlmodul mit unterschiedlichen Korngrößen eingebrachte Trockeneis-Kömung in dem Kühlmodul mittels einer als Siebboden-Anordnung ausgebildeten Einrichtung in unterschiedliche wärmeisolierte Modulbereiche (z.B. Seitenwand- und Bodenbereich) verteilt, wodurch eine an die erforderliche Kühlleistung und Kühlzeit angepasste Kälteerzeugung gewährleistet wird.

Die in dem Kühlmodul durch Einwirkung von Umgebungswärme verdampfenden Bestandteile (Sublimation) der Trockeneis-Körnung fallen durch die Öffnungen der Siebboden-Anordnung in eine geringere Wärmeisolation aufweisende Modulbereiche, wie z.B. in den Bodenwandbereich, wodurch die Kühlleistung erhöht wird.

Diese Erhöhung der Kühlleistung wird aber durch die an der Außenwand des Kühlmoduls anfrierende Luftfeuchtigkeit (Sublimation) und die daraus resultierenden Isolationseffekte vermindert.

Durch Zugabe von in seiner Beschaffenheit und Menge auf die vorhandenen Sublimationseffekte abgestimmtes Kühlmittel in das Kühlmodul und durch eine - ebenfalls auf die vorhandenen Sublimationseffekten abgestimmte - Verteilung des Kühlmittels in dem Kühlmodul, kann eine konstante Kühlleistung über den gesamten Kühlzeitraum gewährleistet werden.

In einer besonders bevorzugten Verfahrensvariante wird die Umgebungstemperatur des Behälters erfasst, wobei die spezifische Oberfläche der Trockeneis-Körnung in Abhängigkeit von der Umgebungstemperatur eingestellt wird. Die Erfassung der Umgebungstemperatur erfolgt beispielsweise durch einen Temperatursensor oder durch eine rechnergestützte Abfrage bei einem Wettervorhersagedienst. Die ermittelte Umgebungstemperatur fließt automatisch oder durch manuelle Eingabe in eine Regelung für die Einstellung der Korngröße der Trockeneis-Körnung ein. Im einfachsten Fall handelt es sich um eine Regelung für die Rotationsgeschwindigkeit einer Zerkleinerungswerkzeugs einer Zerkleinerungseinrichtung.

Es hat sich auch als günstig erwiesen, eine Regelung vorzusehen, mittels der die Menge an Trockeneis-Körnung dem Kühlmodul geregelt zudosiert wird. Die Menge der zudosierten Trockeneis-Körnung bestimmt in erster Linie die Kühldauer des Kühlmoduls. Sie wirkt sich aber auch auf die Kühlleistung aus, da auch die Größe der freien Oberfläche von der Körnungsmenge abhängt. Die Menge der Trockeneis-Körnung ist daher bei der Ermittlung der Kühlleistung und der dafür einzustellenden spezifischen Oberfläche mit zu berücksichtigen. Der Beitrag der Körnungsmenge zur Kühlleistung insgesamt hängt wiederum von der spezifischen Oberfläche der Trockeneis-Körnung ab. Die beschriebenen gegenseitigen Abhängigkeiten werden im einfachsten Fall bei der Ermittlung der einzustellenden spezifischen Oberfläche der Trockeneis-Körnung empirisch erfasst und aufeinander abgestimmt.

Vorteilhafterweise wird bei der Herstellung der Trockeneis-Pellets anfallendes Abgas über eine Rückverflüssigung wieder in den Prozess eingespeist wird. Diese Verfahrensweise ist aus Kostengründen insbesondere bei größeren Abgasmengen sinnvoll. Andernfalls kann das Abgas auch ins Freie abgelassen werden.

Die oben angegebene technische Aufgabe wird hinsichtlich der Vorrichtung - ausgehend von der Vorrichtung der eingangs genannten Gattung - erfindungsgemäß dadurch gelöst, dass der Kühlmittel-Vorrat mit einem mit einer die Trockeneis-Körnung verteilenden Sieb- und Sortiervorrichtung ausgerüsteten Kühlmodul verbunden ist, wobei eine Zerkleinerungseinrichtung mit einem Zerkleinerungswerkzeug mit einstellbarem Zerkleinerungsgrad für Trockeneis-Pellets vorhanden ist. Durch ein geregeltes Zerkleinern der Trockeneis-Pellets lässt sich die mittlere Korngröße der Trockeneis-Körnung und damit die spezifische Oberfläche der Körnung in weitem Rahmen genau und reproduzierbar einstellen. Vorzugsweise wird hierzu eine Zerkleinerungseinrichtung mit einem regelbaren beweglichen Zerkleinerungswerkzeug, zum Beispiel einem rotierenden Messer, eingesetzt. Die mittlere Korngröße der Trockeneis-Körnung - und damit deren spezifische Oberfläche und Kälteleistung - wird über die Geschwindigkeit der Bewegung des Zerkleinerungswerkzeugs eingestellt.

So ist der Kühlmittel-Vorrat über eine Zerkleinerungseinrichtung, in welcher die Trockeneis-Pellets zu Trockeneis-Körnung zerkleinert werden und mittels einer Zuführung direkt oder indirekt mit dem wärmeisolierten Kühlmodul verbunden.

Insoweit kommt die erfindungsgemäße Vorrichtung ohne druckbeaufschlagte Apparaturen und Leitungen aus. Dichtigkeitsprobleme oder aufwendige Sicherheitsvorrichtungen erübrigen sich daher. Die Vorrichtung ist einfach zu bedienen und sie zeichnet sich durch hohe Betriebssicherheit aus. Zusätzlich kann die Vorrichtung auch ein Gerät zur Herstellung von Trockeneis-Pellets (Pelletierer) und/oder einen Behälter zur Aufnahme derselben aufweisen, wobei die Trockeneis-Pellets entweder beim Verlassen dieses Gerätes sofort zur Trockeneis-Körnung zerkleinert werden oder zuerst in den erwähnten Behälter gelangen.

Vorzugsweise ist der Zerkleinerungseinrichtung ein Behälter zur Aufnahme von Trockeneis-Pellets vorgeschaltet. Die Größe des Behälters ist so zu bemessen, dass der darin enthaltene Vorrat eine stockenden Nachschub an Pellets von einem daran angeschlossenen Pelletierers überbrücken kann. Hierzu ist vorzugsweise eine automatische Steuerung durch einen Füllstandsregler vorgesehen. Alternativ ist es auch möglich den Behälter für eine chargenweise Befüllung auszulegen, wobei in dem Fall der Pelletierer anderweitig installiert sein kann und die Pellets fertig angeliefert werden.

Es hat sich besonders bewährt, einen die Umgebungstemperatur erfassenden Temperatursensor vorzusehen, wobei der Zerkleinerungsgrad in Abhängigkeit von der Umgebungstemperatur einstellbar ist. Die vom Temperatursensor ermittelte Umgebungstemperatur fließt automatisch oder durch manuelle Eingabe in eine Regelung für die Einstellung der Korngröße der Trockeneis-Körnung ein. Im einfachsten Fall handelt es sich um eine Regelung für die Rotationsgeschwindigkeit eines Zerkleinerungswerkzeugs der Zerkleinerungseinrichtung.

Eine besonders sichere und genaue Befüllung der Kühlmodule ergibt sich, wenn in der Zuführung für Trockeneis-Körnung eine Dosiereinrichtung für Trockeneis-Körnung angeordnet ist. Über die Dosiereinrichtung wird die Menge an Trockeneis-Körnung dem Kühlmodul geregelt zudosiert. Die Menge der zudosierten Trockeneis-Körnung bestimmt in erster Linie die Kühldauer, sie ist aber auch bei der Ermittlung der Kühlleistung und der dafür einzustellenden spezifischen Oberfläche mit zu berücksichtigen und umgekehrt, wie dies weiter oben anhand des erfindungsgemäßen Verfahrens bereits erläutert worden ist.

Dabei hat es sich besonders bewährt, dass die Zerkleinerungseinrichtung mit dem Temperatursensor für die Umgebungsbedingungen verbunden ist. Dadurch ist eine Regelung der spezifische Oberfläche der Trockeneis-Körnung, die zum Kühlmodul gelangt unter Berücksichtigung der Umgebungstemperatur besonders einfach realisierbar. Daneben ist die Dosiereinrichtung vorteilhafterweise mit einem Füllstandssensor versehen, mittels dem der Vorrat an Trockeneis-Kömung in der Dosiereinrichtung erfasst wird. Bei Bedarf wird Trockeneis-Kömung von der Zerkleinerungseinrichtung - und gegebenenfalls von einem Pelletierer - nachgeliefert.

Das bei der Herstellung der Trockeneis-Pellets anfallende Abgas kann durch eine Rohrleitung entweder quantitativ ins Freie geführt oder - bei großen Mengen - über eine Rückverflüssigung wieder in den Prozess eingespeist werden.

Die zur Trennung des Kühlmittels in unterschiedliche Korngrößenbereiche in dem Kühlmodul eingesetzte Sieb- und Sortiervorrichtung besteht aus mindestens einem Sieb-/Sortiermittel.

Die Sieb- und Sortiervorrichtung weist aber vorzugsweise bis zu vier Sieb-/Sortiermittel auf.

Die Maschenweite (Lochgröße) jedes Sieb-/Sortiermittels beträgt 2 bis 20 mm.

Als "Sieb-/Sortiermittel" ist in der Erfindung jedes zum Sieben und Sortieren in verschiedenen Innenbereichen des Kühlmoduls beabstandet zueinander angeordnetes und eine Vielzahl von Löchern aufweisendes, aus einem kälte- und korrosionsbeständigen Material unterschiedlicher Ausbildung und Struktur bestehendes Mittel bezeichnet, mit dessen Hilfe das in das Kühlmodul eingebrachte Kühlmittel aufgrund seines Gewichts durch Transporterschütterungen oder andere Krafteinwirkungen in unterschiedlichen Komgrößenbereiche getrennt und die getrennten Kühlmittelbestandteile in alle Innenbereiche des Kühlmoduls verteilt werden. Die Trennkorngröße zwischen den beiden Produkten (Siebrückstand und Siebdurchgang) wird durch die Größe der Sieböffnungen bestimmt.

Als Sieb-/Sortiermittel werden vorteilhaft herkömmliche Siebböden verschiedener Maschenweite (Lochgröße) eingesetzt.

Die Siebböden sind vorzugsweise beabstandet zur Seitenwand des Kühlmoduls angeordnet, sodass zwischen jedem Siebboden und der Innenwand des ein als zusätzliche Wärmeisolation wirkender Luftspalt ausgebildet ist.

In einer weiteren vorteilhaften Ausgestaltung der Erfindung sind die Sieb-/Sortiermittel als die Trockeneis-Kömung mit der kleineren Korngröße aufnehmende, mit der Innenwand des Kühlmoduls wärmeleitend verbundene Wabenstrukturen ausgebildet, wodurch die Kälteabgabe der in den Wabenstrukturen befindlichen Trockeneis-Körnung deutlich erhöht wird

Die Sieb-/Sortiermittel der in dem Kühlmodul eingesetzten Sieb- und Sortiervorrichtung sind so gewählt, dass die Wärmeaufnahme des Kühlmittels durch den veränderlichen Abstand der einzelnen Siebe zur Außenhaut variiert werden kann.

Das Sieb-/Sortiermittel mit der maximalen Lochgröße ist am nächsten zur Füllöffnung des Kühlmoduls und das Sieb-/Sortiermittel mit der geringsten Lochgröße direkt oberhalb des Bodens des Kühlmoduls angeordnet.

Die Lochgrößen (Maschenweite) jedes Sieb-/Sortiermittels wird wiederum in Abhängigkeit von der Korngröße des in das Kühlmodul eingebrachten Kühlmittels, der Geschwindigkeit der Korngrößen-Reduktion und der erforderlichen Kühlleistung und Kühlzeit gewählt.

Das erfindungsgemäße Kühlmodul ermöglicht eine kontrollierte, d.h. einstellbare und konstante Verdampfung des Kühlmittels und damit eine den unterschiedlichen Anforderungen entsprechende Kühlung von in einem Transportbehälter gelagerten Waren.

Aufgrund der vergleichsweise geringen spezifischen Oberfläche von Trockeneis-Kömung im Vergleich zu Kohlendioxidschnee - ist die Wärmeisolation des Kühlmoduls den jeweiligen Kühlbedingungen angepasst. Dadurch können die bisher beim Einsatz von Kohlendioxidschnee einhergehenden Nachteile hinsichtlich einer anfänglich hohen und danach rasch abfallenden Kühlleistung vermieden werden. Die von den Abmessungen und Wärmeleitfähigkeit der Modulwandung abhängige Kühlleistung des Kühlmoduls kann während der gesamten Kühlzeit nahezu konstant gehalten werden.

Nachfolgend wird die Erfindung anhand von Ausführungsbeispielen und einer Zeichnung näher erläutert.

Es zeigen:
- Figur 1: eine Ausführungsform der erfindungsgemäßen Vorrichtung in schematischer Darstellung;
- Figur 2: ein erfindungsgemäßer Behälter mit zwei Kühlmodulen in schematischer Darstellung;
- Figur 3: ein erfindungsgemäßes Kühlmodul mit einer Sieb- und Sortiervorrichtung in schematischer Darstellung.

Vorausgeschickt werden folgende Eckwerte: Ein unregelmäßiges Pellet von 1 g Gewicht hat eine Oberfläche von ca. 6 cm² bzw. eine spezifische Oberfläche von 6 cm²/g. 1 kg dieser Pellets verdampft (je nach Verteilung) in ca. 2h. Die Kühlleistung ist also ca. 300 kJ/h. Im Vergleich dazu beträgt die spezifische Oberfläche bei einem Trockeneis-Block weniger als 1 cm²/g. Ein würfelförmiger Block von 1 kg Gewicht (d.h. 640kJ Kälteenergie) hat etwa 600 cm² Oberfläche, und somit eine spezifische Oberfläche ist 0,6 cm²/g. Die Energieaufnahme und damit die Kälteabgabe geschieht nur über die Verdampfung an der Oberfläche. Er verdampft in etwa einem Tag. Seine Kühlleistung ist also 640 kJ/24h oder 27 kJ/h.

Die nachstehende Tabelle 1 zeigt die Zusammenhänge von Korngröße der Trockeneis-Körnung 6 (in der Bezeichnung als Flocken, Granulat, Nuggets) und Kälteleistung. Die Werte sind Näherungswerte und basieren auf einer Schüttung von 1 kg.

**Tabelle 1**

| | **Flocken** **(F)** | **Granulat** **(G)** | **Nuggets** **(N)** | **Dimension** |
|---|---|---|---|---|
| **Durchmesser** | 15 | 15 | 15 | Mm |
| **Länge** | 1 | 5 | 20 | Mm |
| **Masse** | 0,177 | 0,883 | 3,533 | G |
| **Oberfläche** | 4,00 | 5,89 | 12,95 | Cm² |
| **Spez. Oberfl.** | 22,7 | 6,7 | 3,7 | Cm²/g |
| **Verdampfung** | 500 | 200 | 100 | G/h |
| **Kälteleistung** | 0,085 | 0,034 | 0,017 | KWh/kg |

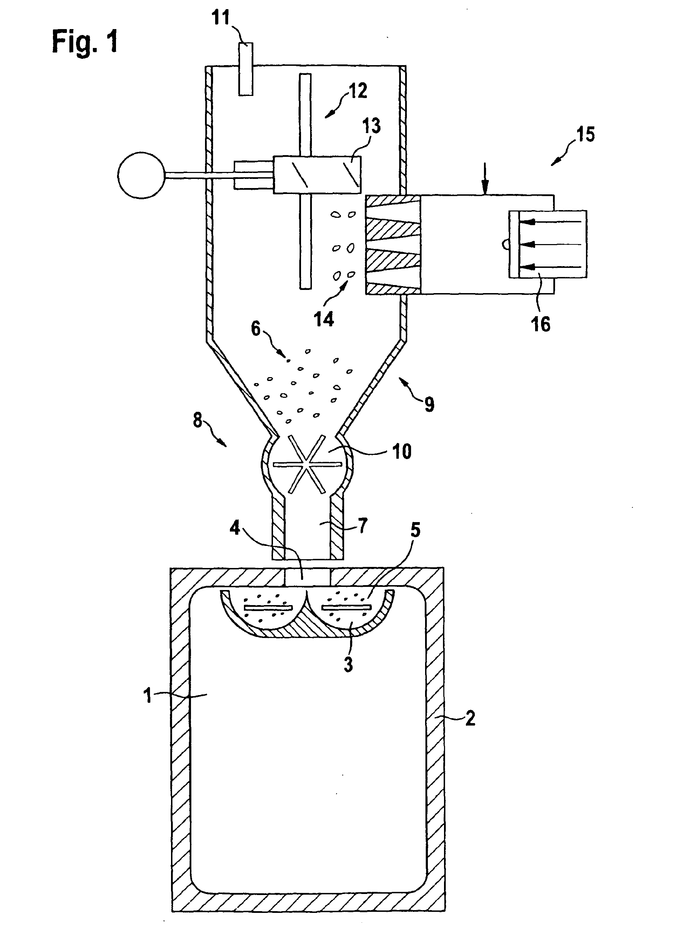

Der in Figur 1 dargestellte Behälter 1 ist mit einer thermisch isolierenden Wandung 2 versehen. Innerhalb des Behälters 1 ist ein Kühlmodul 3 angeordnet. Das Kühlmodul 3 weist die Form einer Schale auf, die mit einer Füllöffnung 4 des Behälters 1 in Verbindung steht und eine Ausgasöffnung in den Innenraum des Behälters aufweist.

Das mit zwei Siebböden 5 ausgerüstete Kühlmodul 3 wird mit Trockeneis-Körnung 6 befüllt. Hierzu ragt in die Füllöffnung 4 ein Füllstutzen 7 einer Dosiereinrichtung 8. Die Dosiereinrichtung 8 umfasst neben dem Füllstutzen 7 einen trichterförmigen Behälter 9, an dessen Auslauf ein Dosierinstrument 10 angeordnet ist sowie einen Füllstandssensor 11.

Die Dosiereinrichtung 8 wird mit Trockeneis-Körnung 6 beschickt. Hierzu ist innerhalb des Behälters 9 und oberhalb des Dosierinstruments 10 ein Zerhacker 12 mit einem rotierenden Messer 13 angeordnet, dem kontinuierlich Trockeneis-Pellets 14 zugeführt und durch das rotierende Messer 13 zu der Trockeneis-Kömung 6 zerhackt werden. Die Erzeugung und Zuführung der Trockeneis-Pellets 14 erfolgt über einen Pelletierer 15, der eine Pressvorrichtung 16 umfasst, die in der Höhe des rotierenden Messers 13 in der Seitenwand des Behälters 9 montiert ist. Der Pressvorrichtung 16 wird KohlendioxidSchnee zugeführt, der darin verdichtet und anschließend über eine Pressdüse in Form der Trockeneis-Pellets 14 in den Innenraum des Behälters 9 befördert und dort von dem rotierenden Messer 13 auf eine voreingestellte mittlere Komgröße der Trockeneis-Körnung 6 zerkleinert wird.

In der Dosiereinrichtung 8 wird hinreichend Trockeneis-Körnung 6 für eine Füllung des Kühlmoduls 3 bevorratet. Der Pelletierer 15 liefert Pellets 14 nach, sobald der Vorrat abnimmt. Die Trockeneis-Pellets 14 werden mittels des Zerhackers 12 auf eine Größe zerkleinert, die zu einer gewünschten Oberfläche je kg Pellets und damit zu der gewünschten Verdampfungsrate bzw. Kühlleistung führt, welche bei den jeweiligen Anforderungen gebraucht wird. Z.B.: kleine Pellets bei Hochsommer, große Pellets bei niedrigeren Außentemperaturen.

Das Dosierinstrument 10 befördert die Trockeneis-Körnung 6 über den Füllstutzen 7 und durch eine Füllöffnung 4 in das mit den Siebböden 5 ausgerüstete Kühlmodul 3 des Behälters 1.

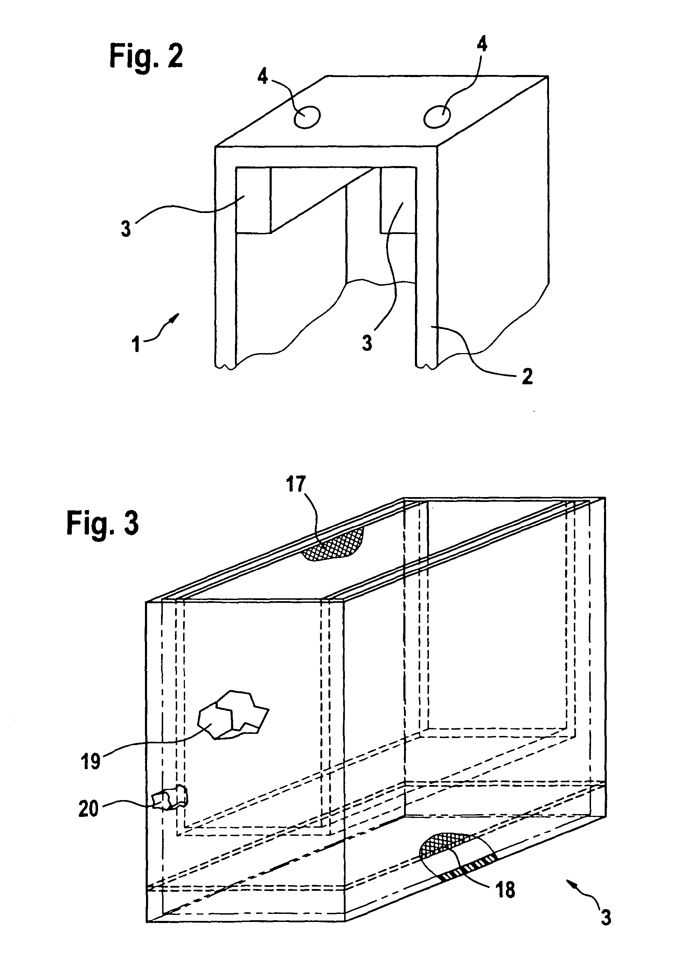

Die Figur 2 zeigt zwei innerhalb des Behälters 1 in vorbeschriebener Weise angeordnete Kühlmodule 3 deren bevorzugte Ausführungsform der Figur 3 zu entnehmen ist.

Das in Figur 3 dargestellte, durch eine mit der Füllöffnung 4 des Behälters 1 in Verbindung stehende Öffnung mit einer Trockeneis-Kömung 19,20 unterschiedlicher Korngröße befüllte Kühlmodul 3 weist zwei Siebböden 17, 18 unterschiedlicher Maschenweite und Anordnung auf.

Der in dem Kühlmodul 3 oberhalb des Siebbodens 18 angeordnete Siebboden 17 ist beabstandet zur Modulseitenwand angeordnet.

Durch diese spezielle Anordnung des Siebbodens 17 im Kühlmodul 3 ist zwischen dem Siebboden 17 und der Innenwand des Kühlmoduls 3 ein als zusätzliche Wärmeisolation wirkender Luftspalt ausgebildet.

Dagegen ist der im Bodenbereich des Kühlmoduls 3 angeordnete Siebboden 18 wärmeleitend mit der Seitenwand des Kühlmoduls 3 verbunden.

Die in dem Kühlmodul 3 mit einer unterschiedlichen Korngröße eingebrachte Trockeneis-Körnung 19, 20 wird durch die Siebboden 17, 18 in Abhängigkeit von ihrer Korngröße in dem Kühlmodul 3 mit einer größtmöglichen spezifischen Oberfläche in der Weise verteilt, dass eine optimale Verdampfung des Kühlmittels und damit eine den jeweiligen Erfordernissen entsprechende Kälteerzeugung mittels des Kühlmoduls 3 in dem Behälter 1 gewährleistet ist.

Dabei fällt die eine Korngröße kleiner als die jeweilige Maschenweite des Bodensiebs 17, 18, aufweisende Teilmenge (Siebdurchgang) der Trockeneis-Körnung 19,20 durch Schwerkrafteinwirkung und aufgrund der transportbedingten Erschütterungen durch die Öffnungen des Siebbodens 17, 18 auf die Bodenwand des Kühlmoduls 3 und verdampft dort - ebenso wie die Teilmenge (Siebrückstand) der auf den Siebboden 17, 18 liegengebliebenen Trockeneis-Körnung 19,20 - durch Einwirkung von Umgebungswärme.

Der Siebbodens 18 kann beispielsweise auch als eine mit der Seitenwand des Kühlmoduls 3 wärmeleitend verbundene Wabenstruktur im Bodenbereich des Kühlmoduls 3 ausgebildet sein.

Die Verdampfung des Kühlmittels erfolgt umso schneller, je weniger das Kühlmittel von der Umgebung isoliert ist, also je näher das Kühlmittel im Innenwandbereich des Kühlmoduls 3 verteilt ist.

Das Kühlmodul 3 bildet einen Berührungsschutz und erfüllt darüber hinaus folgende Funktionen:
1. Es kann Trockeneis-Körnung 5 in hinreichender Menge aufnehmen.
2. Es ist so isoliert, dass die Kälte nicht zu Vereisungen führt, welche die Kühlleistung merklich verändern.
3. Es ist so dicht, dass zwar einerseits gasförmiges CO₂ austreten kann, aber keine Feuchtigkeit dagegen einzieht.

Beim Befüllen des Kühlmoduls 3 mit Trockeneis-Kömung 6 entwickelt sich kein Abgas. Auf eine aufwendige Raumluftüberwachung und Absaugung kann daher verzichtet werden. Bei der Herstellung der Pellets 14 entsteht Abgas. Dieses kann jedoch - je nach Menge - wirtschaftlich zurückgewonnen werden

### Bezugszeichen-Aufstellung

- 1: Behälter
- 2: Wandung
- 3: Kühlmodul
- 4: Füllöffnung
- 5: Siebboden
- 6: Trockeneis-Kömung
- 7: Füllstutzen
- 8: Dosiereinrichtung
- 9: Behälter, trichterförmig
- 10: Dosierinstrument
- 11: Füllstandssensor
- 12: Zerhacker
- 13: Messer, rotierend
- 14: Trockeneis-Pellets
- 15: Pelletierer
- 16: Pressvorrichtung
- 17: Siebboden
- 18: Siebboden
- 19: Trockeneis-Körnung
- 20: Trockeneis-Körnung

## Patentansprüche

1. Verfahren zum Kühlen von Waren in einem wärmeisolierten Transportbehälter (1) mit Kühlmodul (3), wobei dem Kühlmodul (3) in Abhängigkeit einer vorgegebenen Kühlleistung und Kühlzeit ein Kühlmittel zugeführt wird, **dadurch gekennzeichnet, dass** als Kühlmittel vorab in einer Zerkleinerungseinrichtung (12) mechanisch zerkleinerte Pellets (14) als Trockeneis-Körnung (6) zugeführt werden, die in ihrer spezifischen Oberfläche und Menge in Abhängigkeit von der Kühlleistung und der Kühldauer dem Kühlmodul (3) zugeführt und in dem Kühlmodul (3) in einer von der Kühlleistung und Kühldauer abhängigen Korngröße verteilt und verdampft wird.

2. Verfahren nach Anspruch 1, **dadurch gekennzeichnet, dass** die spezifische Oberfläche der Trockeneis-Körnung (6) in Abhängigkeit von der Kühlleistung und die Menge der Trockeneis-Körnung (6) in Abhängigkeit von der Kühldauer eingestellt wird.

3. Verfahren nach einem der Ansprüche 1 oder 2, **dadurch gekennzeichnet, dass** die Trockeneis-Körnung (6) in Abhängigkeit von der erforderlichen Kühlleistung mit einer spezifischen Oberfläche zwischen 2 cm²/g und 30 cm²/g eingesetzt wird.

4. Verfahren nach einem der Ansprüche 1 bis 3, **dadurch gekennzeichnet, dass** die Korngrößenverteilung der in dem Kühlmodul (3) eingebrachten Trockeneis-Körnung (6) in Abhängigkeit von der erforderlichen Kühlleistung und Kühldauer eingestellt wird.

5. Verfahren nach einem der Ansprüche 1 bis 4, **dadurch gekennzeichnet, dass** die mit einer Korngröße von 2 - 20 mm in das Kühlmodul (3) eingebrachte Trockeneis-Körnung (6) in unterschiedliche Bereiche des Kühlmoduls (3) verteilt wird.

6. Verfahren nach einem der Ansprüche 1 bis 5, **dadurch gekennzeichnet, dass** die Umgebungstemperatur des Transportbehälters (1) erfasst wird und dass die spezifische Oberfläche der Tiockeneis-Körnung (6) in Abhängigkeit von der Umgebungstemperatur eingestellt wird.

7. Verfahren nach einem der Ansprüche 1 bis 6, **dadurch gekennzeichnet, dass** eine Regelung vorgesehen ist, mittels der die Menge an Trockeneis-Körnung (6) dem Kühlmodul (3) geregelt zudosiert wird.

8. Verfahren nach einem der Ansprüche 1 bis 7, **dadurch gekennzeichnet, dass** bei der Herstellung der Trockeneis-Pellets (14) anfallendes Abgas über eine Rückverflüssigung wieder in den Prozess eingespeist wird.

9. Wärmeisolierter Transportbehälter (1) mit einem Kühlmodul (3) für die Aufnahme von Trockeneis, umfassend einen Kühlmittel-Vorrat, aus dem das Kühlmodul (3) in Abhängigkeit von einer vorgegebenen Kühlleistung über eine Kühlmittel-Zuführung mit Kühlmittel gespeist wird, wobei das Kühlmodul (3) mit einer die Trockeneis-Körnung (6) verteilenden Sieb- und Sortiervorrichtung (5) ausgerüstet ist, **dadurch gekennzeichnet, dass** der Kühlmittel-Vorrat über eine Zerkleinerungseinrichtung (12, 13) und eine Zuführeinrichtung mit dem Kühlmodul (3) verbunden ist, wobei die Zerkleinerungseinrichtung (12, 13) ein Zerkleinerungswerkzeug (13) mit einstellbarem Zerkleinerungsgrad für Trockeneis-Pellets (14) umfasst.

10. Vorrichtung nach Anspruch 9, **dadurch gekennzeichnet, dass** der Zerkleinerungseinrichtung (12, 13) ein Behälter zur Aufnahme von Trockeneis-Pellets als Kühlmittel-Vorrat vorgeschaltet ist.

11. Vorrichtung nach einem der Ansprüche 9 oder 10, **dadurch gekennzeichnet, dass** ein die Umgebungstemperatur erfassender Temperatursensor vorgesehen ist, wobei der Zerkleinerungsgrad in Abhängigkeit von der Umgebungstemperatur einstellbar ist.

12. Vorrichtung nach einem der Ansprüche 10 bis 11, **dadurch gekennzeichnet, dass** in der Zuführung für Trockeneis-Körnung (6) eine Dosiereinrichtung (10) für Trockeneis-Körnung (6) angeordnet ist.

13. Vorrichtung nach Anspruch 9, **dadurch gekennzeichnet, dass** die in dem Kühlmodul (3) angeordnete Sieb- und Sortiervorrichtung (5) mindestens ein Sieb-/ Sortiermittel aufweist.

14. Vorrichtung nach Anspruch 9, **dadurch gekennzeichnet, dass** die in dem Kühlmodul angeordnete Sieb- und Sortiereinrichtung (5) vorzugsweise bis zu vier Sieb-/ Sortiermittel aufweist.

15. Vorrichtung nach Anspruch 14, **dadurch gekennzeichnet, dass** jedes Sieb-/ Sortiermittel aus einem kältefesten und korrosionsbeständigen Material verschiedener Maschenweite und unterschiedlicher Ausbildung besteht.

16. Vorrichtung nach einem der Ansprüche 14 oder 15, **dadurch gekennzeichnet, dass** jedes Sieb- / Sortiermittel eine Maschenweite von vorzugsweise 2 bis 20 mm aufweist.

17. Vorrichtung nach einem der Ansprüche 15 bis 16, **dadurch gekennzeichnet, dass** das Sieb-/ Sortiermittel mit der größten Maschenweite unterhalb jeder Kühlmittel-Füllöffnung und das Sieb-/ Sortiermittel mit dem kleinsten Maschenweite oberhalb der Bodenwand des Kühlmoduls (3) angeordnet ist.

18. Vorrichtung nach einem der Ansprüche 14 bis 17, **dadurch gekennzeichnet, dass** die Sieb-/ Sortiermittel beabstandet zueinander angeordnet sind.

19. Vorrichtung nach einem der Ansprüche 14 bis 18, **dadurch gekennzeichnet, dass** die Sieb-/ Sortiermittel beabstandet zur Seitenwand (2) des Kühlmoduls (3) angeordnet sind.

20. Vorrichtung nach einem der Ansprüche 14 bis 18, **dadurch gekennzeichnet, dass** die Sieb-/ Sortiermittel wärmeleitend mit der Seitenwand (2) des Kühlmoduls (3) verbunden sind.

21. Vorrichtung nach einem der Ansprüche 13 bis 20, **dadurch gekennzeichnet, dass** die Sieb-/ Sortiermittel eine mit einer Vielzahl von Löchern versehene Wabenstruktur mit aufweisen.

22. Vorrichtung nach einem der Ansprüche 9 bis 21, **dadurch gekennzeichnet, dass** das Kühlmodul (3) entsprechend der erforderlichen Kühlleistung und Kühlzeit sowie der Beschaffenheit und Menge des Kühlmittels ausgebildet ist.

## Claims

1. Method for the refrigeration of goods in a thermally insulated transport container (1) with a refrigerating module (3), the refrigerating module (3) being supplied with a refrigerant as a function of a stipulated refrigerating capacity and refrigerating time, **characterized in that** the refrigerant supplied is pellets (14), previously comminuted mechanically in a comminuting arrangement (12), as dry ice grain (6) which, in terms of its specific surface and quantity, is supplied to the refrigerating module (3) as a function of the refrigerating capacity and refrigerating duration and in the refrigerating module (3) is distributed in a grain size dependent on the refrigerating capacity and refrigerating duration and is evaporated.

2. Method according to Claim 1, **characterized in that** the specific surface of the dry ice grain (6) is set as a function of the refrigerating capacity and the quantity of the dry ice grain (6) is set as a function of the refrigerating duration.

3. Method according to either one of Claims 1 and 2, **characterized in that** the dry ice grain (6) is used with a specific surface of between 2 cm²/g and 30 cm²/g as a function of the required refrigerating capacity.

4. Method according to one of Claims 1 to 3, **characterized in that** the grain size distribution of the dry ice grain (6) introduced in the refrigerating module (3) is set as a function of the required refrigerating capacity and refrigerating duration.

5. Method according to one of Claims 1 to 4, **characterized in that** the dry ice grain (6) introduced with a grain size of 2-20 mm into the refrigerating module (3) is distributed into different regions of the refrigerating module (3).

6. Method according to one of Claims 1 to 5, **characterized in that** the ambient temperature of the transport container (1) is detected, and **in that** the specific surface of the dry ice grain (6) is set as a function of the ambient temperature.

7. Method according to one of Claims 1 to 6, **characterized in that** a control is provided, by means of which the quantity of dry ice grain (6) is metered to the refrigerating module (3) in a controlled manner.

8. Method according to one of Claims 1 to 7, **characterized in that** exhaust gas occurring during the production of the dry ice pellets (14) is fed into the process again via recondensation.

9. Thermally insulated transport container (1) with a refrigerating module (3) for the reception of dry ice, comprising a refrigerant stock, from which the refrigerating module (3) is fed with refrigerant as a function of a stipulated refrigerating capacity via a refrigerant supply, the refrigerating module (3) being equipped with a screening and sorting device (5) distributing the dry ice grain (6), **characterized in that** the refrigerant stock is connected to the refrigerating module (3) via a comminuting arrangement (12, 13) and a supply arrangement, the comminuting arrangement (12, 13) comprising a comminuting tool (13) having an adjustable degree of comminution for dry ice pellets (14).

10. Device according to Claim 9, **characterized in that** the comminuting arrangement (12, 13) is preceded by a container for the reception of dry ice pellets as a refrigerant stock.

11. Device according to either one of Claims 9 and 10, **characterized in that** a temperature sensor detecting the ambient temperature is provided, the degree of comminution being adjustable as a function of the ambient temperature.

12. Device according to either one of Claims 10 and 11, **characterized in that** a metering arrangement (10) for dry ice grain (6) is disposed in the supply for dry ice grain (6).

13. Device according to Claim 9, **characterized in that** the screening and sorting device (5) disposed in the refrigerating module (3) has at least one screening/sorting means.

14. Device according to Claim 9, **characterized in that** the screening and sorting device (5) arranged in the refrigerating module has preferably up to four screening/sorting means.

15. Device according to Claim 14, **characterized in that** each screening/sorting means consists of a cold-proof and corrosion-resistant material of different mesh width and different form.

16. Device according to either one of Claims 14 and 15, **characterized in that** each screening/sorting means has a mesh width of preferably 2 to 20 mm.

17. Device according to either one of Claims 15 and 16, **characterized in that** the screening/sorting means having the largest mesh width is disposed below each refrigerant filling port, and the screening/sorting means having the smallest mesh width is disposed above the bottom wall of the refrigerating module (3).

18. Device according to one of Claims 14 to 17, **characterized in that** the screening/sorting means are disposed so as to be spaced apart from one another.

19. Device according to one of Claims 14 to 18, **characterized in that** the screening/sorting means are disposed so as to be spaced apart from the side wall (2) of the refrigerating module (3).

20. Device according to one of Claims 14 to 18, **characterized in that** the screening/sorting means are connected to the side wall (2) of the refrigerating module (3) in a thermally conductive manner.

21. Device according to one of Claims 13 to 20, **characterized in that** the screening/sorting means have a honeycomb structure provided with a multiplicity of holes.

22. Device according to one of Claims 9 to 21, **characterized in that** the refrigerating module (3) is designed correspondingly to the required cooling capacity and cooling time and to the nature and quantity of the refrigerant.

## Revendications

1. Procédé pour réfrigérer des marchandises dans un conteneur de transport calorifugé (1) utilisant un module de réfrigération (3), dans lequel un agent réfrigérant est envoyé au module de réfrigération (3) en fonction d'une puissance de réfrigération et d'une durée de réfrigération prédéterminées, **caractérisé en ce que** l'on envoie comme agent réfrigérant des pellets (14) broyées mécaniquement dans un dispositif de broyage (12) sous forme de glace sèche granulée (6), qui est envoyée au module de réfrigération (3), en ce qui concerne leur surface spécifique et leur quantité, en fonction de la puissance de réfrigération et de la durée de réfrigération, et est répartie et vaporisée dans le module de réfrigération (3) en une granulométrie dépendant de la puissance de réfrigération et de la durée de réfrigération.

2. Procédé selon la revendication 1, **caractérisé en ce que** l'on règle la surface spécifique de la glace sèche granulée (6) en fonction de la puissance de réfrigération et la quantité de la glace sèche granulée (6) en fonction de la durée de réfrigération.

3. Procédé selon l'une quelconque des revendications 1 ou 2, **caractérisé en ce que** l'on utilise la glace sèche granulée (6) présentant une surface spécifique comprise entre 2 cm²/g et 30 cm²/g en fonction de la puissance de réfrigération nécessaire.

4. Procédé selon l'une quelconque des revendications 1 à 3, **caractérisé en ce que** l'on règle la répartition de la granulométrie de la glace sèche granulée (6) introduite dans le module de réfrigération (3) en fonction de la puissance de réfrigération et de la durée de réfrigération nécessaires.

5. Procédé selon l'une quelconque des revendications 1 à 4, **caractérisé en ce que** l'on répartit la glace sèche granulée (6) introduite dans le module de réfrigération (3) avec une granulométrie de 2 - 20 mm dans des zones différentes du module de réfrigération (3).

6. Procédé selon l'une quelconque des revendications 1 à 5, **caractérisé en ce que** l'on détecte la température ambiante du conteneur de transport (1) et **en ce que** l'on règle la surface spécifique de la glace sèche granulée (6) en fonction de la température ambiante.

7. Procédé selon l'une quelconque des revendications 1 à 6, **caractérisé en ce qu'**il est prévu une régulation, au moyen de laquelle on dose de façon régulée la quantité de glace sèche granulée (6) envoyée au module de réfrigération (3).

8. Procédé selon l'une quelconque des revendications 1 à 7, **caractérisé en ce que** l'on réintroduit dans le processus, par le biais d'une reliquéfaction, les gaz d'échappement produits lors de la fabrication des pellets de glace sèche (14).

9. Conteneur de transport calorifugé (1) utilisant un module de réfrigération (3) destiné à contenir de la glace sèche, comprenant une réserve d'agent réfrigérant, à partir de laquelle le module de réfrigération (3) est alimenté en agent réfrigérant par une addition d'agent réfrigérant en fonction d'une puissance de réfrigération prédéterminée, dans lequel le module de réfrigération (3) est équipé d'un dispositif de criblage et de tri (5) répartissant la glace sèche granulée (6), **caractérisé en ce que** la réserve d'agent réfrigérant est raccordée au module de réfrigération (3) au moyen d'un dispositif de broyage (12, 13) et d'un dispositif d'alimentation, dans lequel le dispositif de broyage (12, 13) comprend un outil de broyage (13) avec un degré de broyage réglable pour les pellets de glace sèche (14).

10. Dispositif selon la revendication 9, **caractérisé en ce qu'**un réservoir destiné à contenir des pellets de glace sèche comme réserve d'agent réfrigérant est installé avant le dispositif de broyage (12, 13).

11. Dispositif selon l'une quelconque des revendications 9 ou 10, **caractérisé en ce qu'**il est prévu un capteur de température détectant la température ambiante, dans lequel le degré de broyage est réglable en fonction de la température ambiante.

12. Dispositif selon l'une quelconque des revendications 10 à 11, **caractérisé en ce qu'**un dispositif de dosage (10) pour la glace sèche granulée (6) est disposé dans l'alimentation de la glace sèche granulée (6).

13. Dispositif selon la revendication 9, **caractérisé en ce que** le dispositif de criblage et de tri (5) disposé dans le module de réfrigération (3) comprend au moins un moyen de criblage/tri.

14. Dispositif selon la revendication 9, **caractérisé en ce que** le dispositif de criblage et de tri (5) disposé dans le module de réfrigération comprend de préférence jusque quatre moyens de criblage/tri.

15. Dispositif selon la revendication 14, **caractérisé en ce que** chaque moyen de criblage/tri est constitué d'une matière résistante au froid et à la corrosion avec une ouverture de maille différente et une forme différente.

16. Dispositif selon l'une quelconque des revendications 14 ou 15, **caractérisé en ce que** chaque moyen de criblage/tri présente une ouverture de maille de préférence de 2 à 20 mm.

17. Dispositif selon l'une quelconque des revendications 15 à 16, **caractérisé en ce que** le moyen de criblage/tri avec la plus grande ouverture de maille est disposé en dessous de chaque ouverture de remplissage d'agent réfrigérant et le moyen de criblage/tri avec la plus petite ouverture de maille est disposé au-dessus de la paroi de fond du module de réfrigération (3).

18. Dispositif selon l'une quelconque des revendications 14 à 17, **caractérisé en ce que** les moyens de criblage/tri sont disposés à distance l'un de l'autre.

19. Dispositif selon l'une quelconque des revendications 14 à 18, **caractérisé en ce que** les moyens de criblage/tri sont disposés à distance de la paroi latérale (2) du module de réfrigération (3).

20. Dispositif selon l'une quelconque des revendications 14 à 18, **caractérisé en ce que** les moyens de criblage/tri sont reliés de façon conductrice de la chaleur à la paroi latérale (2) du module de réfrigération (3).

21. Dispositif selon l'une quelconque des revendications 13 à 20, **caractérisé en ce que** les moyens de criblage/tri présentent également une structure en nid d'abeilles pourvue d'une pluralité de trous.

22. Dispositif selon l'une quelconque des revendications 9 à 21, **caractérisé en ce que** le module de réfrigération (3) est réalisé selon la puissance de réfrigération et la durée de réfrigération nécessaires ainsi que selon la nature et la quantité de l'agent réfrigérant.
